# EUROPEAN PATENT APPLICATION

(11) **EP 2 733 623 A1**
(43) Date of publication of application: **21.05.2014**
(21) Application number: 14155188.7
(22) Date of filing: 16.03.2009
(51) Int. Cl.: G06F 17/22

(54) **Rapid localized language development for video matrix switching system**

(30) Priority: 17.03.2008 US 69745
(62) Divisional of application: 09722779.7
(71) Applicant: Sensormatic Electronics, LLC, Boca Raton, FL 33487 (US)
(72) Inventor: Schieltz, Steven W., Boca Raton, FL Florida 33486 (US); McBride, Monte Charles, Boynton Beach, FL Florida 33426 (US); Benkirane, Nick A., Boca Raton, FL Florida 33498 (US); Claggett, Kenneth Lee, Fort Lauderdale, FL Florida 33311 (US)
(74) Representative: Chew, Kwan Chong Daniel

(57) **Abstract**

Systems and methods are provided for selecting a subset of Unicode characters and overlaying the Unicode characters on graphical images, videos or other media that are displayed on a user interface. The Unicode characters may include both ASCII characters and non-ASCII characters, Tools are provided for dynamically modifying and selecting image patterns, symbols or icons that represent non-ASCII and ASCII character fonts. Applications are provided for editing, verifying and managing the image patterns, symbols or icons that represent character fonts.

## Description

### CROSS-REFERENCE TO RELATED APPLICATIONS

The present invention is related to and claims priority to United States Provisional Patent Application No. 61/069,745, filed March 17, 2008, entitled RAPID LOCALIZED LANGUAGE DEVELOPMENT FOR VIDEO MATRIX SWITCHING SYSTEM, the entire contents of which is incorporated herein by reference.

### FIELD OF THE INVENTION

The invention relates generally to methods and systems for overlaying text on a user interface of closed circuit video security surveillance systems. More specifically the invention provides systems and methods of overlaying preselected Unicode characters on user interfaces of closed circuit video security surveillance systems.

### BACKGROUND OF THE INVENTION

Conventional video security surveillance systems provide text overlay capabilities that use character encoding schemes based on the American Standard Code for Information Interchange (ASCII) characters. The languages supported by these characters are limited to languages that may be expressed using the English alphabet.

In these conventional video security surveillance systems, text overlay capabilities employ graphical user interface (GUI) menu translation tables and character font bit map patterns that are embedded directly into the product software and firmware. For example, plug-in ROM circuits or firmware load files are needed to create unique font versions of the character sets. All of the languages stored in the GUI menu translation tables, all of the stored character fonts, and any manual translations are defined and verified before the product is produced and shipped to users.

In conventional systems, any modifications or additions to the GUI menu translation tables require field or factory upgrades. Supporting documentation is translated, supplied in paper or CD format, and inserted into the product at the factory or distribution center, or given directly to the user.

Conventional systems provide little support for displaying text overlay in non-ASCII (or Unicode) characters. Unicode is an industry standard that allows computers to consistently represent and manipulate text expressed in most of the world's writing systems and includes about 100,000 characters. For example, the non-ASCII Korean Hangul alphabet includes over 2350 characters. Existing central processing units (CPU) for video output modules stores only 1024 characters. A method and system are needed that store and display any subset of a large set of Unicode characters in a manner that does not require expensive and time-consuming factory or field upgrades.

### SUMMARY OF THE INVENTION

The invention advantageously provides systems and methods of selecting a subset of Unicode characters and overlaying the Unicode characters on graphical images that are displayed on a user interface. The Unicode characters may include both ASCII characters and non-ASCII characters.

A method is provided of receiving a plurality of characters generated using predefined image formats. Image patterns associated with the plurality of characters may be modified. Unicode values may be obtained for the plurality of characters and a predefined number of characters may be selected from the plurality of characters. Dynamic character code values may be assigned to the selected characters and the Dynamic character code values and the Unicode values may be associated for the selected characters. The selected characters may be displayed on a graphical user interface based on entry of the dynamic character code values or the Unicode values.

A system is provided for overlaying characters on images displayed on a graphical user interface. The system includes a character selection module that enables selection of a subset of characters and an edit module that edits image patterns corresponding to the subset of characters. A dynamic character module is provided to convert character values from a first character value to a second character value. The dynamic character module also associates the first character value with the second character value. An overlay module is provided to receive characters having the second character values for display on the graphical user interface.

A method is provided of overlaying language specific characters on images displayed on a graphical user interface. A plurality of language options are presented on the graphical user interface and selection of one of the language options is enabled. Upon selection of a language, Unicode character subsets are obtained that are associated with the selected language option. Dynamic character code values are received for the plurality of characters that correspond to the selected language option and characters from the selected language option are displayed on the graphical user interface using the dynamic character code values.

### BRIEF DESCRIPTION OF THE DRAWINGS

A more complete understanding of the invention, and the attendant advantages and features thereof, will be more readily understood by reference to the following detailed description when considered in conjunction with the accompanying drawings wherein:
FIG. 1 illustrates a block diagram of an exemplary character overlay system constructed in accordance with the principles of the invention;
FIG. 2 illustrates an exemplary diagram for associating Unicode values and Dynamic code values for the system constructed in accordance with the principles of the invention; and
FIG. 3 illustrates a flow chart of a method of overlaying characters on graphical images displayed on a user interface.

### DETAILED DESCRIPTION OF THE INVENTION

Before describing in detail exemplary embodiments that are in accordance with the invention, it is noted that the embodiments reside primarily in combinations of apparatus components and processing steps related to implementing systems and methods of overlaying selected Unicode characters on user interfaces of closed circuit video security surveillance systems. Accordingly, the system and method components are represented where appropriate by conventional symbols in the drawings, showing only those specific details that are pertinent to understanding the embodiments of the invention so as not to obscure the disclosure with details that will be readily apparent to those of ordinary skill in the art having the benefit of the description herein. There is no intention to limit the scope of the invention only to the embodiments described.

As used herein, relational terms, such as "first" and "second," "top" and "bottom," and the like, may be used solely to distinguish one entity or element from another entity or element without necessarily requiring or implying any physical or logical relationship or order between such entities or elements. The invention encompasses a broader spectrum than the specific subject matter described and illustrated.

Traditional closed circuit video security surveillance systems display image patterns of characters for ASCII based languages. The image patterns are graphical representations of fonts. The image patterns are conventionally implemented using plug-in ROM circuits or firmware load files. If additional or different image patterns are desired, engineers or other technicians are deployed in the field to access and upgrade the closed circuit video security surveillance systems. Therefore, modifying existing image patterns is expensive and time consuming.

Conventional systems do not support non-ASCII based languages, such as Chinese, Japanese, Korean, Arabic, Russian and other non-Latin languages. Written symbols for non-ASCII based languages may be digitally expressed using image patterns. Non-ASCII based languages include thousands of written symbols, icons or other patterns, which may require significant system resources to store. Traditional systems have limited memory capacity to store sets of image patterns. Conventional systems do not enable users to select and dynamically modify image patterns. The invention provides users with tools for dynamically modifying and selecting image patterns that represent non-ASCII and ASCII character fonts.

According to one embodiment of the invention, applications are provided for editing, verifying and managing image patterns that represent character fonts. The character font image patterns may be computer generated. For example, the character font image patterns may be computer generated using pixel-by-pixel editors, among other editors. The character font image patterns may be identified by unique image codes, such as Unicode designators or other unique image codes. There are currently over 100,000 Unicode characters that are identified by unique character designators. Unicode is an industry standard allowing computers to consistently represent and manipulate text that is expressed in most written languages. Unicode is well known and is therefore not described in detail herein.

The invention provides methods and systems for selecting and identifying character subsets from the tens of thousands of Unicode characters. The character subsets may include subsets of language specific characters, dialect specific characters, and geographic region specific characters, among other subsets. According to one embodiment, the character subset selection may be restricted based on size requirements or other system features. Other metrics may be applied to define subset selection.

The non-ASCII Korean Hangul alphabet may include over 2350 characters. A system memory may determine a maximum number of characters that are supported by the system. For example, existing systems may be capable of storing only 1024 characters. The invention stores and displays a subset of 1024 characters from the Korean Hangul alphabet, which includes the larger set of 2350 characters. Directories, files, folders or other structures may be defined and associated with selected character subsets.

The invention provides systems and methods of overlaying ASCII-based characters and non-ASCII-based characters on images, video or other media that are displayed on graphical user interfaces of closed circuit video security surveillance systems. For example, the invention overlays text on graphical user interfaces of closed circuit video security surveillance systems, including camera titles, alarm messages, date, and time of day, among other text. According to one embodiment, the ASCII-based characters and the non-ASCII-based characters are generated using Unicode character identifiers.

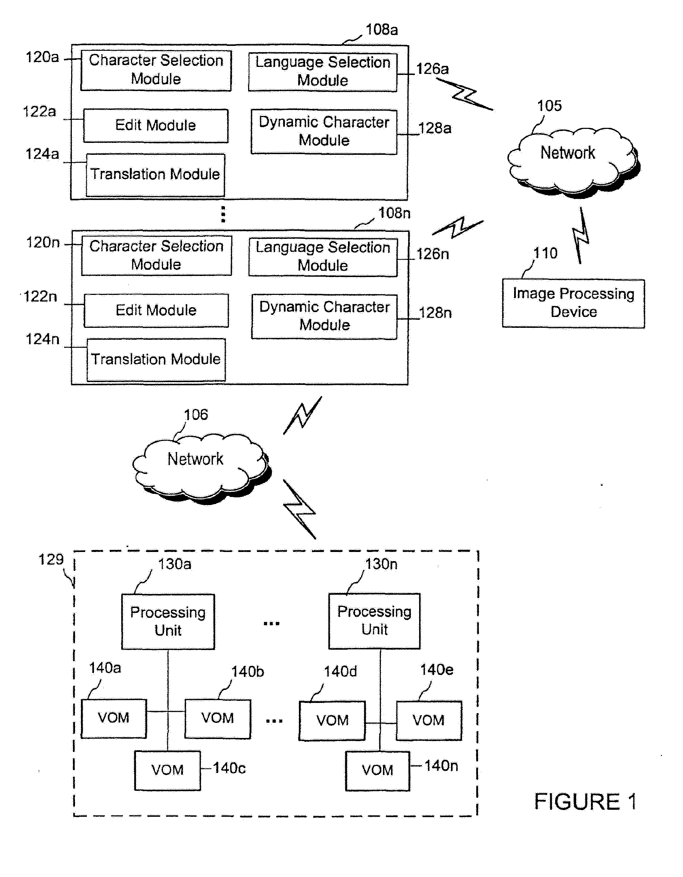

Referring now to the drawing figures in which like reference designations refer to like elements, there is shown in FIG. 1 a system constructed in accordance with the principles of the present invention and designated generally as "100." System 100 includes workstations 108a-108n (hereinafter identified collectively as 108) that communicate with one or more servers and/or other devices via a wired network, a wireless network, a combination of the foregoing and/or other network(s) (for example a local area network) 105. Workstation 108 may include components, such as user interfaces, input devices and modules, among other components.

System 100 also includes an image processing device 110 that communicates with the workstation 108 to provide image patterns. The image processing device 110 may obtain desired Unicode characters from commercially available sources or may enable creation of new image patterns. Commercially available sources may include vendors of custom image patterns or vendors of pre-existing image patterns, among other commercially available sources. For example, custom image patterns may include special order image patterns, while pre-existing image pattern may include off the shelf image patterns obtained from Microsoft®; or other vendors. The image patterns may be generated using any format including bitmaps, joint photographic expert group (JPEG), and graphics interchange format (GIF), among other formats.

According to one embodiment, the image processing device 110 may organize the image patterns in selected configurations, such as a database configuration 112, for presentation to the workstation 108. For example, database configuration 112 may include image patterns, symbols, or icons for desired languages. The image patterns may include bitmaps having a predefined format, such as a 12x12 pixel resolution, a standard "BMP" format, the character pixels may be non-white pixels on a "pure" white background (RGB = 255,255,255), the pixel depth may be any value (1bpp, 24bpp, high color, etc.), among other formats. The file name for each bitmap may be NAME.bmp, where NAME represents a hexadecimal number that matches the Unicode value for the character rendered by the bitmap. As a result, the bitmaps may be searched by the corresponding Unicode value.

The image processing device 110 may receive source files for conversion to database files. For example, the image processing device 110 may receive source files, NAME.bmp, for conversion to database files, LANGUAGE.dbd. The source bitmaps may be configured or converted to a 12x12 resolution at 1 bit per pixel (bpp) and stored as 144 contiguous bits (18 bytes). The upper left pixel may be represented by the high bit MSB of the first byte and each subsequent pixel in the row may be represented by the next bit going from high bit (MSB) to the low bit (LSB). The rows from left to right may be represented by three nibbles (12 bits) going from high bit to low bit in the nibble.

The workstation 108 communicates with the image processing device 110 to receive Unicode characters. According to one embodiment, the workstations 108 may include any number of different types of workstations, such as personal computers, laptops, smart terminals, personal digital assistants (PDAs), cell phones, Web TV systems, video game consoles, kiosks, devices that combine the functionality of one or more of the foregoing or other workstations. Furthermore, a select function may be implemented by positioning an indicator over selected icons and manipulating an input receiving device such as a touch-sensitive display screen, a mouse, a keyboard, a voice recognition system or other input receiving devices.

Workstations 108 may include, or be modified to include, corresponding modules that may operate to generate subsets of characters provided in selected database files. The workstations 108 may be configured to operate Windows® applications or other applications. A character selection module 120 enables selection of a subset of Unicode characters that are available from the database files. The subset of Unicode characters may include image patterns, symbols or icons that are associated with different languages. An edit module 122 is used to edit, verify and manage the image patterns that represent the character fonts. A translation module 124 dynamically accepts translations provided in a predefined table structure for a graphical user interface menu and other text strings. A language selection module 126 enables internal selection of predefined languages or any new dynamically defined languages. The predefined languages and dynamically defined languages may include characters that correspond to ASCII-based languages and non-ASCII-based languages. According to one embodiment, the language selection module 126 may use font libraries, menu translations and manuals provided in respective folders. File structures, folder structures and naming conventions may be evaluated to determine whether data is a Unicode character font bit map, a graphical user interface screen/menu selection table or translated manuals. A dynamic character module 128 converts Unicode values to Dynamic code values between zero and the maximum number of characters supported by a memory device or other limiting device. Workstations 108 may be of modular construction to facilitate adding, deleting, updating and/or amending modules therein and/or features within modules. Modules may include software, memory, or other modules. It should be readily understood that a greater or lesser number of modules might be used. One skilled in the art will readily appreciate that the invention may be implemented using individual modules, a single module that incorporates the features of two or more separately described modules, individual software programs, and/or a single software program.

The workstation 108 may automatically detect new languages based on the existence of named dedicated folders. The named dedicated folders may include content that is derived from a combination of languages. The workstation 108 may include applications that access selected named dedicated folders to obtain folder content. The named dedicated folders may be imported from remote devices. A new folder name may signify a new language name. The new language name may be displayed in the language selection menu of the system set-up screen. The workstation 108 prompts users to select new languages. When a new language is selected, the information from the name dedicated folder may be used to obtain Unicode character fonts, generate a graphical user interface screen and menu translation data table, and generate manuals in the selected language. The menu translation table may be provided in any existing data structure, e.g., Microsoft® Excel® spread sheet format.

A tool may be provided to verify that the graphical user interface screen and menu translation table include message lengths that are sized to fit the menu or screen area, all fields are translated and none remain blank, provide a context description for translators and provide a comparison to the English language information and all the other predefined languages, among providing other verification.

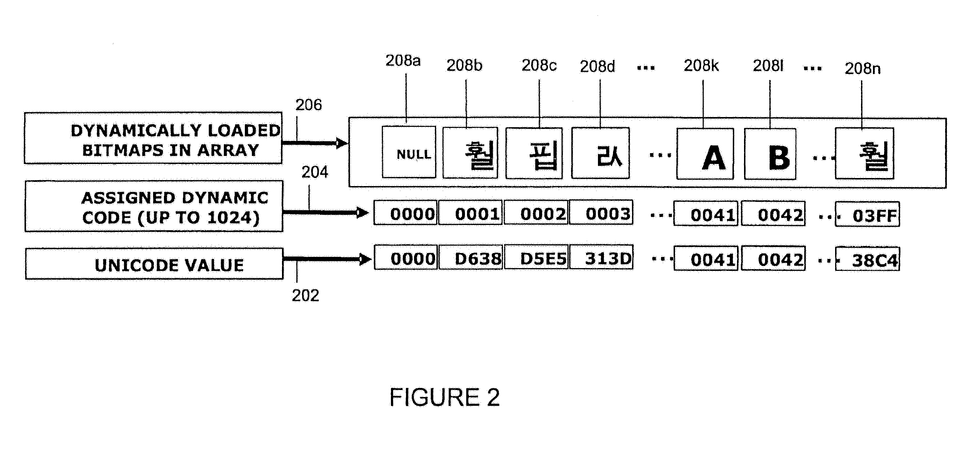

According to one embodiment, the dynamic character module 128 may be used to map selected ones of the 100,000 Unicode values to a predefined number of Dynamic code values. For example, the predefined number of Dynamic code values may support 1024 characters or some other fixed character number. The 100,000 Unicode vales include both ASCII characters and non-ASCII characters. The ASCII characters may be selected and may be assigned Dynamic code values. According to one embodiment, the ASCII characters may be assigned Unicode equivalent Dynamic code values. As illustrated in FIG. 2, row 202 illustrates Unicode values 0041 and 0042 that correspond to ASCII characters "A" and "B," respectively. As illustrated in row 204, these ASCII characters may be assigned Dynamic code values 0041 and 0042. By contrast, Unicode values D638, D5E5 and 313D illustrated in row 202 may correspond to non-ASCII Korean characters 208b-208d illustrated in row 206. The non-ASCII characters 208b-208d may be assigned Dynamic code values 0001, 0002 and 0003, as illustrated in row 204. According to one embodiment, Dynamic code value 0000 may be assigned to "null" character 208a.

Referring again to FIG. 1, the dynamic character module 128 may maintain a count of the number of assigned Dynamic code values. If the number of assigned Dynamic code values is equal to the fixed predefined number or is within a defined threshold limit of the maximum fixed predefined number, then an alert is generated advising of the condition. If characters and their corresponding Dynamic code values are deleted, then the dynamic character module 128 may adjust its count and satisfy any pending alerts. According to one embodiment, the workstation 108 may identify less important characters for deletion or may display all characters that have assigned Dynamic code values for action by the user. Alternatively, the workstation 108 may display stored phrases, such as camera titles and alarm messages, for action by the user based on a determination of less significant characters.

According to one embodiment, the dynamic character module 128 and the edit module 122 allow users to dynamically modify image patterns that are associated with Unicode values or Dynamic code values. The modified image patterns allow users to create and store individualized ASCII characters and non-ASCII characters. Since video outputs of video matrix systems typically support various resolutions, it is beneficial to provide users with control over image quality, such as enabling dynamic modification of image patterns.

System 100 also includes a video matrix switching system 129 having a processing unit 130 (shown in FIG. 1 as processing units 130a-130n) that communicates with the workstations 108 over a wired network, a wireless network, a combination of the foregoing and/or other network(s) (for example a local area network) 106. The processing unit 130 may include RAM, USB interfaces, telephone interfaces, microphones, speakers, a stylus, computer mouse interface, wide area network interface, local area network interface, hard disk, wireless communication interface, keyboard interface, a graphical user interface, and a display, among other components.

The dynamic character module 128 presents users with a language list on the graphical user interface. If a non-ASCII language is selected, the dynamic character module 128 initiates a dynamic character mode. In this mode, Unicode character values used in "camera titles," "alarm messages," and the processing unit 130 "static strings" are examined. A look-up of the corresponding font bitmaps in the non-ASCII language bitmap database is performed. The workstation 108 provides the processing unit 130 with font bitmaps corresponding to the Unicode character values used in "camera titles," "alarm messages," and the processing unit 130 "static strings." The workstation 108 assigns unique Dynamic code values to the character font bitmaps. "Camera titles," "alarm messages," and other dynamic character strings along with the processing unit 130 "static strings" are loaded to the processing unit 130 as Dynamic character strings for the Dynamic code values assigned to the bitmaps. According to one embodiment, basic ASCII-based language bitmaps are downloaded with each non-ASCII based language. The Unicode values for the ASCII characters are assigned to the Dynamic code values.

In response to receiving the non-ASCII language selection, the workstation 108 downloads to the processing unit 130 a database file that includes a subset of the Unicode values for the selected language. The bitmap font that corresponds to the subset of the Unicode values is provided to the processing unit 130. The source bitmaps may be configured or converted to a 12x12 resolution at 1 bit per pixel (bpp) and stored as 144 contiguous bits (18 bytes). The upper left pixel may be represented by the high bit MSB of the first byte and each subsequent pixel in the row may be represented by the next bit going from high bit (MSB) to the low bit (LSB). The rows from left to right may be represented by three nibbles (12 bits) going from high bit to low bit in the nibble. A bit value of 1 in the 144 bit array specifies that the pixel is part of the character and will be displayed. A bit value of 0 in the 144 bit array specifies that the pixel is not to be displayed.

The processing unit 130 receives a file from the workstation 108 that includes Dynamic code values and the associated bitmaps for the characters. A Unicode to Dynamic code value mapping is sent to the processing unit 130. The "camera titles," "alarm messages," and the processing unit 130 "static strings" and other dynamic strings are sent to the processing unit 130 as string of Dynamic code values. If a Unicode value has not been processed, the workstation 108 accesses a non-ASCII database file to identify the corresponding bitmap. If it is found, the bitmap is retrieved and the next available Dynamic code value is assigned to the bitmap. The Dynamic code value to bitmap data is saved to a file. Additionally, the Unicode value to Dynamic code value data will be saved to an internal list.

The processing unit 130 communicates with a plurality of video output modules VOMs 140a-140n (referred to collectively as VOM 140) to provide information that includes Dynamic code values with the associated bitmaps for the characters. The information may be provided in a file or other data structure. Upon receiving the Dynamic code values with the associated bitmaps for the characters, the VOM 140 may over write the previously stored information with the newly received information. For example, a storage device, such as a FLASH memory, may be provided to store the bitmaps for the dynamically defined character sets. The storage device may be limited to a predefined size, such as a storage capacity of 1024 characters. The storage capacity will vary depending on the size of the storage device. The VOM 140 may include an overlay module 142 that overlays the text over the display output.

According to one embodiment, a Dynamic code value is assigned for each new Unicode value. Dynamic code value 000H is not assigned because it is used as a string terminator. Dynamic code value 001 H may be reserved for a box character that will be displayed for characters that are not present in the VOM character set. Dynamic code value 020H is reserved for the space " " character. Dynamic code value 002H is the first available for assignment. For dynamic strings, a file having the dynamic character to bitmaps definition is provided to the processing unit 130 and the VOM 140.

The processing unit 130 receives a Unicode value to Dynamic code value internal list is provided for all characters that are referenced by Dynamic code values. The processing unit 130 does not use this mapping directly. Rather, this internal list allows Dynamic code values stored in the processing unit 130 for camera titles and alarm message to be translated back to equivalent Unicode values for display in Camera Definition and Contact Definition forms. The invention provides bitmap fonts that are dynamically loaded by the processing unit 130 and provided to the VOMs 140 as image patterns that overlay a user interface image when Dynamic code values are requested. The VOMs 140 convert the image patterns into displayable patterns of interlaced National Television System Committee (NTSC) video or Phase Alternating Line (PAL) video, among other analog systems. The VOMs 140 may also operate with digital systems.

According to one embodiment, the text may include dark outlined borders to increase visibility over various video images. This is achieved by setting the character cell area transparent. Then the character bitmap is modified to a dark image over a transparent background. The bitmap is moved one pixel position in each of eight directions (up, down, left, right, and four diagonals) and combined with the cell such that the dark prevails over the transparent.

The original character that is expressed as light over transparent is then combined with the cell such that the light prevails. An image is formed of the original light character font with a dark border and being transparent beyond the border. The VOM 140 displays these characters as "camera titles," "alarm messages" and other dynamic character strings by sending the corresponding Dynamic code values. The Dynamic code values may be 2-bytes. The workstation 108 may include Windows® compatible applications and Unicode characters that are supported by the Windows® environment.

To reduce flicker caused by displaying high contrast characters with straight-line edges on CCTV monitors that use interlaced scanning to display normally analog live video pictures, an output text circuit maintains equal bit images on adjacent character lines in field 1 and field 2 of the frame.

Regarding security features, workstation 108 and processor unit 130 support Unicode user names and passwords. Authentication information may be sent as ASCII

HEX characters that represent the Unicode values for the characters. Authentication modules may compare the authentication information with pre-existing records and operate as a gatekeeper to the system 100. If a determination is made that the user is a registered user, the authentication module may attempt to authenticate the registered user by matching the entered authentication information with preexisting access information. If the user is not authenticated, then the user may be invited to resubmit the requested authentication information or take other action. If the user is authenticated, then the system 100 may perform other processing. For example, the workstation 108 and processor unit 130 may be permitted to submit information requests and receive information, among performing other actions.

Users may interface with the processor unit 130 in a first language while the workstations 108 may display a graphical user interface of the same information in a second language. In other words, the language modes of the processing unit 130 and the workstations 108 are mutually exclusive.

FIGS. 1 and 2 are provided for illustrative purposes only and should not be considered limitations of the invention. Other configurations will be appreciated by those skilled in the art and are intended to be encompassed by the invention.

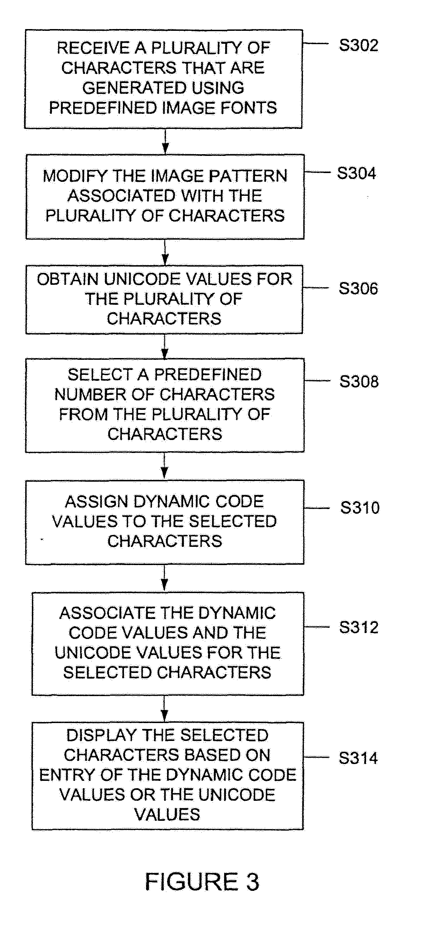

FIG. 3 illustrates a flow chart for a method of overlaying characters on graphical images displayed on a user interface. In step S302, a plurality of characters is received that are generated using predefined image formats. In step S304, image pattern associated with the plurality of characters may be modified. Unicode values are obtained for the plurality of characters (step S306). In step S308, a subset or predefined number of characters are selected from the plurality of characters. Dynamic code values are assigned to the selected characters (step S310). In step S312, the dynamic code values and the Unicode values are associated for the selected characters. The selected characters are then displayed based on entry of the dynamic code values or the Unicode values (step S314).

The invention may be realized in hardware, software, or a combination of hardware and software. Any kind of computing system, or other apparatus adapted for carrying out the methods described herein, is suited to perform the functions described herein.

A typical combination of hardware and software could be a computer system having one or more processing elements and a computer program stored on a storage medium that, when loaded and executed, controls the computer system such that it carries out the methods described herein. The invention can also be embedded in a computer program product, which comprises all the features enabling the implementation of the methods described herein, and which, when loaded in a computing system is able to carry out these methods. Storage medium refers to any volatile or non-volatile storage device.

Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

In addition, unless mention was made above to the contrary, it should be noted that all of the accompanying drawings are not to scale. Significantly, this invention can be embodied in other specific forms without departing from the spirit or essential attributes thereof, and accordingly, reference should be had to the following, claims, rather than to the foregoing specification, as indicating the scope of the invention.

### Clauses:

1. A method of overlaying characters on graphical images displayed on a user interface, comprising:
   receiving a plurality of characters generated using predefined image formats;
   enabling modification of image pattern associated with the plurality of characters;
   obtaining first values for the plurality of characters;
   selecting a predefined number of characters from the plurality of characters;
   assigning dynamic code values to the selected characters;
   associating the dynamic code values and the first values for the selected characters; and
   enabling display of the selected characters based on entry of at least one of the dynamic code values and the first values.
2. The method according to clause 1, wherein the first values are Unicode values.
3. The method according to clause 1, further comprising:
   storing the dynamic code values and the first values for the selected characters in a first file structure;
   providing a file name for the first file structure; and
   enabling selection of the first file structure based on the file name.
4. The method according to clause 3, further comprising:
   maintaining an application in a second file structure;
   enabling the application to access the first file structure; and
   storing the first file structure and the second file structure in different locations.
5. The method according to clause 4, further comprising storing at least one of a font library, a menu translation and a manual in the first file structure.
6. The method according to clause 1, wherein receiving a plurality of characters includes receiving fonts that correspond to a plurality of languages.
7. The method according to clause 6, wherein the plurality of languages include at least one of Chinese, Japanese, Arabic, Russian, and Korean.
8. The method according to clause 1, wherein selecting the predefined number of characters includes selecting a maximum number of characters.
9. The method according to clause 8, wherein selecting the maximum number of characters includes selecting up to 1024 characters.
10. The method according to clause 1, wherein associating the dynamic code values and the first values for the selected characters includes mapping the dynamic code values to first values.
11. The method according to clause 1, wherein enabling display of the selected characters includes generating a character outline.
12. The method according to clause 1, further comprising tracking the predefined number of characters and enabling deletion of characters if the maximum number of characters is attained.
13. A system for overlaying characters on images displayed on a graphical user interface, comprising:
   a character selection module, the character selection module enabling selection of a subset of characters;
   an edit module, the edit module enabling editing of image patterns corresponding to the subset of characters;
   a dynamic character module, the dynamic character module converting character values from a first character value to a second character value and associates the first character value with the second character value; and
   an overlay module, the overlay module receiving characters having the second character values for display on the graphical user interface.
14. The system of clause 13, wherein the first character value is a Unicode value and the second character value is a Dynamic code value.
15. The system of clause 13, wherein the overlay module includes a memory structure having a predefined character storage capacity.
16. The system of clause 15, wherein the predefined storage capacity is 1024 characters.
17. The system of clause 13, wherein the subset of characters are selected from ASCII characters and non-ASCII characters.
18. A method of overlaying language specific characters on images displayed on a graphical user interface, comprising:
   presenting a plurality of language options on the graphical user interface;
   receiving selection of one of the language options;
   obtaining Unicode character subsets associated with the selected language option;
   receiving dynamic character code values for the plurality of characters that correspond to the selected language option; and
   displaying characters from the selected language option based on the dynamic character code values.
19. The method of clause 18, wherein the plurality of language options include characters corresponding to ASCII characters and non-ASCII characters.
20. The method of clause 18, wherein the plurality of language options include at least one of Chinese, Japanese, Arabic, Russian, and Korean.

## Claims

1. A method of configuring a video matrix switching system in a video surveillance system to overlay selected characters on graphical images displayed on a user interface associated with the video matrix switching system, the method comprising:
receiving a plurality of characters for video matrix switching system configuration, the plurality of characters being generated using predefined image formats;
enabling modification of image patterns associated with the plurality of characters;
obtaining first values for the plurality of characters;
selecting a predefined number of characters from the plurality of characters for storage in the video matrix switching system for overlay on graphical images, the unselected characters not being stored in the video matrix switching system;
assigning dynamic code values to the selected characters;
mapping the dynamic code values to the first values for the selected characters;
and
providing, to the video matrix switching system for video matrix switching system configuration, the assigned dynamic code values, the selected characters and a list corresponding to the mapping of the dynamic code values to the first values for selected characters.

2. The method according to claim 1, wherein the first values are Unicode values.

3. The method according to claim 1 or claim 2, further comprising:
storing the dynamic code values and the first values for the selected characters in a first file structure;
providing a file name for the first file structure; and
enabling selection of the first file structure based on the file name.

4. The method according to claim 3, further comprising:
maintaining an application in a second file structure;
enabling the application to access the first file structure; and
storing the first file structure and the second file structure in different locations.

5. The method according to claim 3 or 4, further comprising storing at least one of a font library, a menu translation and a manual in the first file structure.

6. The method according to any one of the preceding claims, wherein receiving a plurality of characters includes receiving fonts that correspond to a plurality of languages.

7. The method according to any one of the preceding claims, wherein selecting the predefined number of characters includes selecting a maximum number of characters supported by the video matrix switching system.

8. The method according to any one of the preceding claims, wherein the plurality of languages include at least one of Chinese, Japanese, Arabic, Russian, and Korea.

9. The method according to any one of the preceding claims, further comprising overlaying at least a portion of the predefined number of characters, the overlaid characters including character outlines.

10. The method according to any one of the preceding claims, further comprising tracking the predefined number of characters and enabling deletion of characters if the maximum number of characters is attained.

11. A video surveillance system for overlaying characters on images displayed on a graphical user interface, comprising:
a workstation, the workstation including:
a character selection module (120), the character selection module (120) configured to allow selection of a subset of characters having a corresponding subset of first character values;
an edit module (122), the edit module (122) configured to allow editing of image patterns corresponding to the subset of characters;
a dynamic character module (128), the dynamic character module (128) configured to convert character values from the first character value to a second character value and associate a character from the subset of characters with the second character value; and
a video matrix switching system, the video matrix switching system being configured to:
receive, from the workstation, the subset of characters and second character values;
store the subset of characters and second character values, the unselected characters not being stored in the video matrix switching system; and
overlay characters on images based at least in part on the received subset of characters and second character values.

12. The system of claim 11, wherein the first character value is a Unicode value and the second character value is a Dynamic code value.

13. The system of claim 11 or 12, wherein the subset of characters are selected from ASCII characters and non-ASCII characters.
